# EUROPEAN PATENT SPECIFICATION

(11) **EP 2 962 919 B1**
(45) Date of publication and mention of the grant of the patent: **07.09.2016**
(21) Application number: 15175338.1
(22) Date of filing: 03.07.2015
(51) Int. Cl.: B62H 5/14

(54) **RING LOCK WITH DETACHABLE CHAIN OR CABLE**
RINGSCHLOSS MIT ABNEHMBARER KETTE ODER SEIL
ANTIVOL EN FORM DE ANNEAU AVEC CHAÎNE OU CABLE DÉTACHABLE

(30) Priority: 04.07.2014 NL 2013132
(43) Date of publication of application: 06.01.2016
(73) Proprietor: AXA Stenman Nederland B.V., 3903 AV Veenendaal (NL)
(72) Inventor: Stunnebrink, Marco Dimphina Henricus, 3903 AV Veenendaal (NL); Mendivelso, Elmer Curcho, 3903 AV Veenendaal (NL)
(74) Representative: V.O.

(56) References cited:
- EP-A1- 1 418 302
- EP-A1- 1 717 135
- EP-A1- 1 834 864
- WO-A1-90/02074
- DE-U1-202009 002 004
- NL-A- 1 040 142

## Description

### FIELD

The invention relates to a ring lock with a detachable chain or cable with the aid of which the ring lock can be fastened to an external object.

### BACKGROUND

A ring lock is known from *inter alia* the European patent application EP1717135A1, which is considered to be the closest prior art and discloses all of the features of the preamble of claim 1.

This publication discloses a bicycle lock provided with a lock housing, a lock mechanism included in the lock housing, and a ring bolt having a substantially circular segment-shaped configuration. The ring bolt can be brought in a closed position and an opened position. In the closed position the ring bolt is locked by the lock mechanism. Through operation of the lock mechanism the ring bolt can be released to be brought in the opened position. Further, the known lock is provided with a cable pin opening in which a cable pin of a cable or chain can be inserted, so that the ring lock can be fastened to an external object such as, e.g., a fence, a tree or a post. The known lock is further provided with a fixing element which through rotation of a lock cylinder can be moved from a locking position to an unlocking position. In the locking position the fixing element extends into the cable pin opening and engages a circumferential groove which is included in the cable pin. When the fixing element has been brought in the unlocking position, the fixing element has been moved out of the cable pin opening and hence also out of the circumferential groove of the cable pin, so that the cable pin can be taken out of the cable pin opening of the lock.

While the known ring lock offers an eminent protection from theft, there are possibilities of further improvement.

### SUMMARY OF THE INVENTION

In attempts to sabotage the known ring lock provided with a cable or chain with cable pin which has been inserted into the lock housing of the ring lock, the cable is often pulled forcefully. At the same time, the lock may be struck with a hammer so that the fixing element, as a result of vibration and mass inertia, can gradually move to the release position. The bicycle can then be detached from the external object, such as a fence, tree or post, and be taken to a workplace where undisturbedly the ring lock can be further broken open.

The invention contemplates a ring lock offering still better protection from this manner of sabotage.

To this end, the invention provides a ring lock which comprises at least:
- a lock housing;
- a lock mechanism which is included in the lock housing;
- a ring bolt having a substantially circular segment-shaped configuration, while the ring bolt is bringable in a closed position and an opened position and in the closed position is locked by the lock mechanism and through operation of the lock mechanism is released to be brought in the open position;
- a cable or chain provided with a cable pin having a cable pin circumferential groove;
- a cable pin opening, which is provided in the lock housing and which extends in the direction of a cable pin opening axis, in which the cable pin can be received;
- a fixing element which is movably arranged in the lock housing and which is bringable in a locking position in which a fixing element flange of the fixing element extends at least partly into the cable pin opening, so that the fixing element flange in the locking position is in engagement with the cable pin circumferential groove of a cable pin introduced into the cable pin opening, the fixing element being movable through operation of the lock mechanism into an unlocking position in which the fixing element flange has been brought out of engagement with the cable pin circumferential groove;
- a fixing element receiving cavity which is formed in the lock housing and in which the movable fixing element is received, the fixing element receiving cavity comprising a flange receiving cavity in which the fixing element flange is received in a manner movable from the locking position to the unlocking position and vice versa;
characterized in that the flange receiving cavity on a side thereof facing the cable pin opening is provided with a chamber, whose dimension viewed in the movement direction of the fixing element flange during locking and unlocking substantially corresponds to the dimension of the fixing element flange in that direction, while the fixing element is received in the fixing element receiving cavity with some play and/or is slightly deformable, such that as a result of an exertion of a pulling force on the cable pin, the fixing element flange moves into the chamber, so that movement of the fixing element being in the locking position is blocked.

What is accomplished with the ring lock according to the invention is that when a saboteur tries to sabotage the lock by pulling the cable or chain and, possibly, simultaneously striking the lock with a hammer, the fixing element flange, under the influence of the pulling force exerted on the cable or chain, and due to the play and/or due to the deformability, moves into the chamber of the flange receiving cavity. Once taken up into this chamber, the fixing element flange cannot move up and down from the locking position to the unlocking position anymore. Pulling the cable or chain therefore has a counterproductive effect in that the unauthorized dislodgement of the cable pin from the cable pin opening actually becomes virtually impossible, because the fixing element flange cannot move away out of the circumferential groove of the cable pin anymore.

Further elaborations of the invention are described in the subclaims and will hereinafter be further clarified on the basis of an example, with reference to the figures.

### BRIEF DESCRIPTION OF THE FIGURES

Fig. 1 is a perspective exploded view of an example of a ring lock incorporating various embodiments of the invention;
Fig. 2 is a perspective view of the ring lock represented in Fig. 1 with omission of the lock front cover and the lock rear cover;
Fig. 3 shows a detail of Fig. 2;
Fig. 4 shows a perspective view of the ring lock 1 of Fig. 1, in exploded view, prior to assembly;
Fig. 5 shows a detail of Fig. 4;
Fig. 6 shows another perspective view of the example of the ring lock represented in Fig. 1;
Fig. 7 shows a cross section of the example of the ring lock represented in Fig. 1, taken along a plane in which the ring bolt moves when it is moved from the closed position to an opened position and vice versa; and
Fig. 8 shows a similar cross section to that represented in Fig. 7, but with the cable pin inserted and locked in the cable pin opening, while the cable is being pulled.

### DETAILED DESCRIPTION

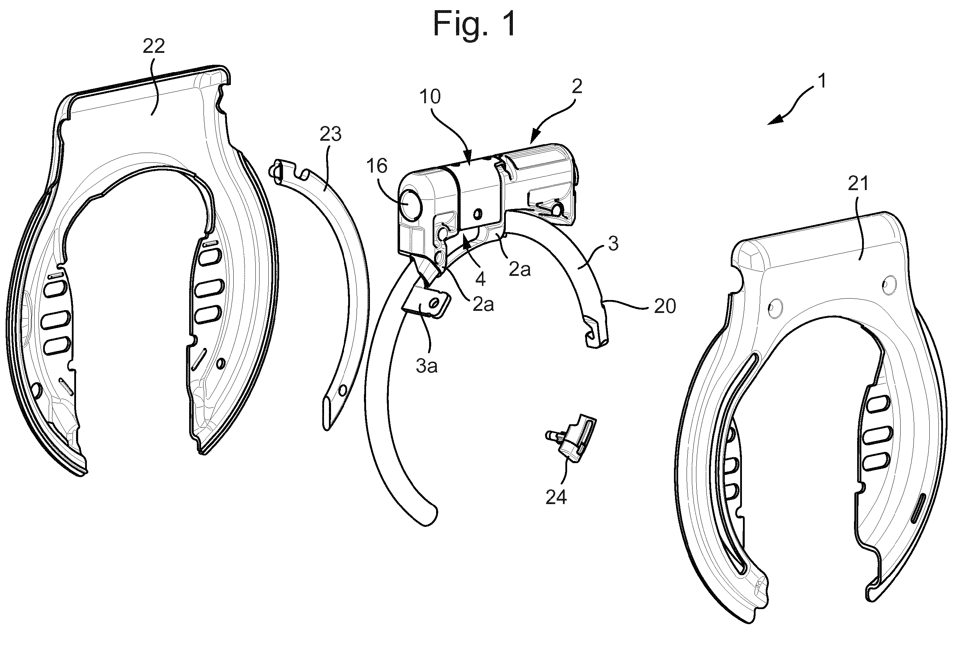

Figs. 1-8 show an example of a ring lock incorporating various embodiments as described in the subclaims. It is noted that the embodiments can also be applied independently of each other and that the invention is not limited to the example shown in the figures. The reference numerals are used herein for clarification but have no limiting effect. An embodiment may also be implemented in a manner other than represented in the example shown in the figures.

In the most general terms, the ring lock 1 comprises a lock housing 2 and a lock mechanism which is included in the lock housing 2. Further, the ring lock 1 is provided with a ring bolt 3 having a substantially circular segment-shaped configuration. The ring bolt 3 can be brought in a closed position and an opened position. In the closed position the ring bolt 3 is locked by the lock mechanism and through operation of the lock mechanism the ring bolt 3 is released to be brought into the opened position. Further, the ring lock is provided with a cable or chain 28 provided with a cable pin 29 having a cable pin circumferential groove 29a. In the lock housing 2 a cable pin opening 16 is provided which extends in the direction of a cable pin opening axis P. In the cable pin opening 16 the cable pin 29 can be received. The ring lock 1 is further provided with a fixing element 17 which is movably arranged in the lock housing 2. The fixing element 17 can be brought in a locking position in which a fixing element flange 17a of the fixing element 17 extends at least partly into the cable pin opening 16, so that the fixing element flange 17a in the locking position is in engagement with the cable pin circumferential groove 29a of a cable pin 29 introduced into the cable pin opening 16. The fixing element 17 is movable into an unlocking position by operation of the lock mechanism. In this unlocking position the fixing element flange 17a has been brought out of engagement with the cable pin circumferential groove 29a. In the lock housing 2 a fixing element receiving cavity 18 is formed in which the movable fixing element 17 is received. The fixing element receiving cavity 18 comprises a flange receiving cavity 18a in which the fixing element flange 17a is received in a manner movable from the locking position to the unlocking position and vice versa.

The ring lock 1 is characterized in that the flange receiving cavity 18a on a side thereof facing the cable pin opening 16 is provided with a chamber 18b, whose dimension viewed in the movement direction of fixing element flange 17a during locking and unlocking substantially corresponds to the dimension of the fixing element flange 17a in that direction. The fixing element 17 is included in the fixing element receiving cavity with some play and/or is slightly deformable, such that as a result of an exertion of a pulling force on the cable pin 29, the fixing element flange 17a moves into the chamber 18b. As a result, movement of the fixing element 17 which is in the locking position is blocked.

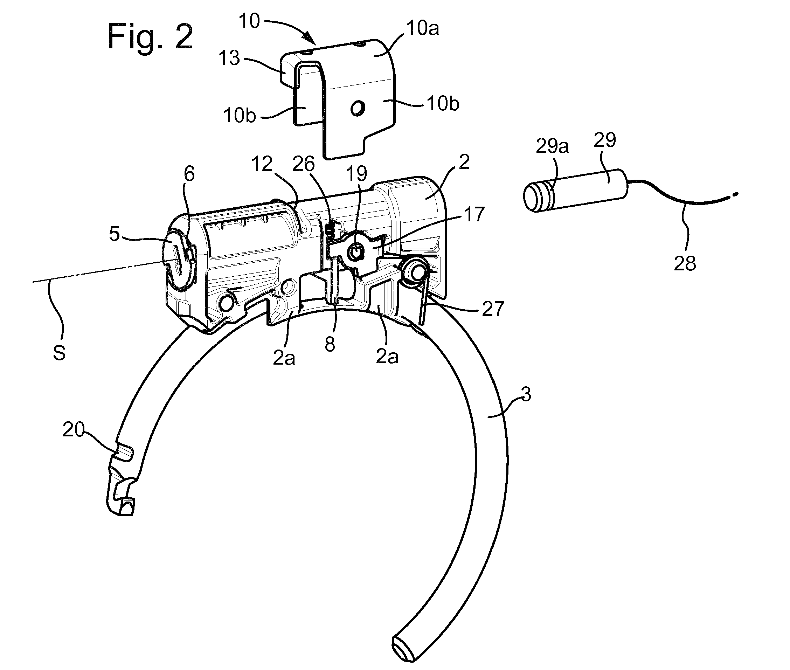

The fixing element 17, the fixing element flange 17a, the fixing element receiving cavity 18 and the flange receiving cavity 18a and the chamber 18b are clearly visible in Figs. 2-7.

Further embodiments are successively clarified below with reference to the drawings.

Fig. 1 shows a lock front cover 21 and a lock rear cover 22. In addition to the movable ring bolt 3, the ring lock 1 also comprises a fixed ring bracket 23. Just like the movable ring bolt 3, this fixed ring bracket 23 is generally made from hardened material that cannot, or hardly so, be sawn through or ground through with a saw or grinding wheel. In a closed position of the ring lock 1, the movable ring bolt 3 and the fixed ring bracket 23 form a closed circular ring which is not interrupted at any circumferential position. Further, Fig. 1 shows a fastening element 24 by means of which the fixed ring bracket 23 is connected with the lock front cover 21 and the lock rear cover 22 and which provides a point of engagement for a first end of a helical draw spring (not shown). The helical draw spring is connected by a second end thereof to the movable ring bolt 3. When the lock mechanism is operated, the movable ring bolt 3 is released and the helical draw spring pulls the movable ring bolt 3 into the opened position. To close the ring lock 1, a user must move the movable ring bolt 3 against the spring action of the helical draw spring into the closed position. To that end, the ring bolt 3 is generally provided with a knob which, in this exemplary embodiment, is connected with the flange 3a which is visible in Fig. 1. Finally, Fig. 1 shows a covering cap 10 which is placed on the lock housing 2 and which will be described in more detail hereinafter.

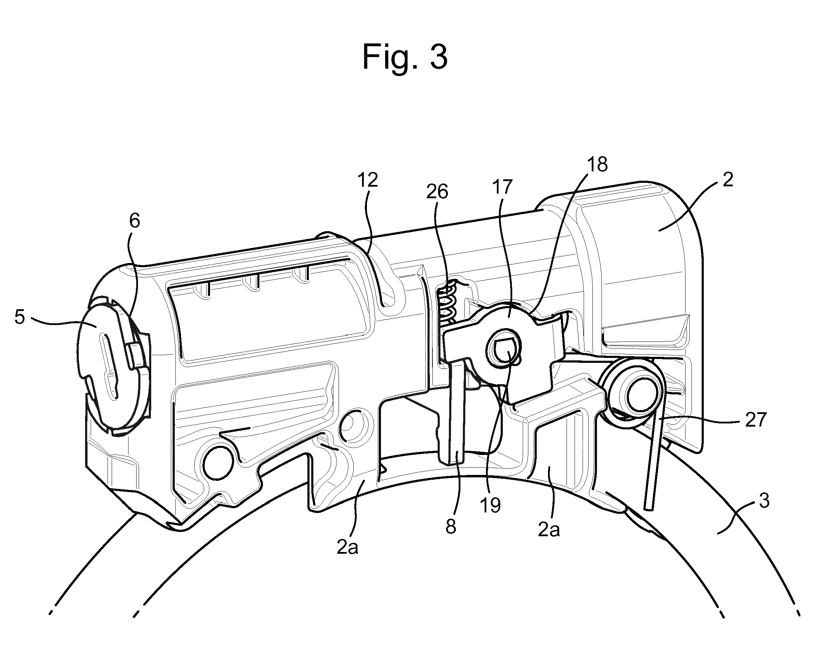

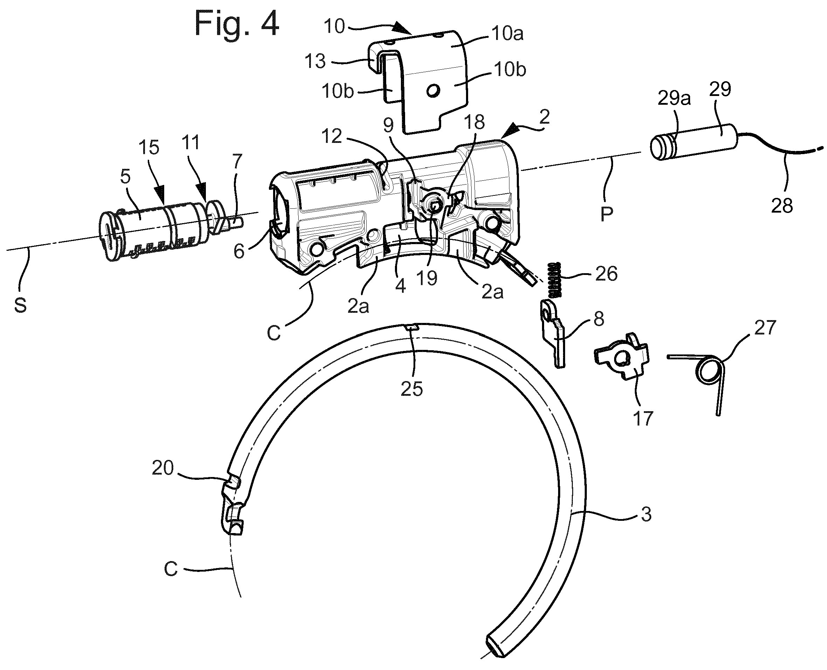

Fig. 2 is a perspective front view of the example of the ring lock 1 of Fig. 1, with the covering cap 10 lifted off the lock housing 2, so that parts of the lock mechanism are visible. Fig. 3 shows a detail of Fig. 2. In Figs. 2 and 3 there is shown a lock cylinder 5 which is received in a lock cylinder opening 6 of the lock housing 2. The lock cylinder 5 extends in the direction of a lock cylinder axis S and is connected with an eccentric cam 7 (see Figs. 4, 5 and 7), which is disposed eccentrically relative to the lock cylinder axis S. Also visible is a locking plate 8, which is movably included in the lock housing 2 and is in engagement with the eccentric cam 7. In a closed condition of the ring bolt 3, the locking plate 8 engages a notch 20 (see also Fig. 4) which is provided in the ring bolt 3. To this end, a first spring 26 (see also Figs. 3-5 and 7) is present which biases the locking plate 8 towards the ring bolt 3. In the opened condition of the ring bolt 3, the locking plate 8 can also engage a notch 25 in the ring bolt 3 to prevent the ring bolt 3 moving out of the opened position at an undesired moment. Such an event is unwanted because during cycling it could lead to the ring bolt 3 moving between the spokes of the bicycle wheel, thereby leading to a sudden blocking of the wheel, with all the consequences thereof. Through rotation of the lock cylinder 5 and the eccentric cam 7 connected therewith, the locking plate 8 is bringable, against the spring action of the first spring 26, into an unlocking position, in which it is out of engagement with the notch 20. The ring bolt 3 is then released to be brought into the opened position. This generally takes place automatically by means of the earlier-mentioned helical draw spring, not shown. The locking plate 8 is received in a locking plate receiving cavity 9, which is formed in the lock housing 2. The locking plate receiving cavity 9 is provided with a locking plate receiving cavity supply opening, via which the locking plate 8 is bringable into the locking plate receiving cavity 9 during assembly.

Fig. 2 further shows clearly the covering cap 10 having a substantially U-shaped configuration. In this exemplary embodiment, the covering cap 10 consists of a covering cap body 10a and two covering cap legs 10b extending from the covering cap body 10a. The covering cap legs 10b in assembled condition of the ring lock 1 extend on opposite sides of the lock housing 2. The covering cap 10 in that condition covers the locking plate receiving cavity supply opening, such that the locking plate 8 is confined in the locking plate receiving cavity 9. The covering cap 10 is preferably made from a hardened metal, such as hardened steel, or from a hard alloy. As a consequence, even with a drill or grinding wheel, a saboteur cannot, or can only with very great effort, gain access to the locking plate 8 and the fixing element 17.

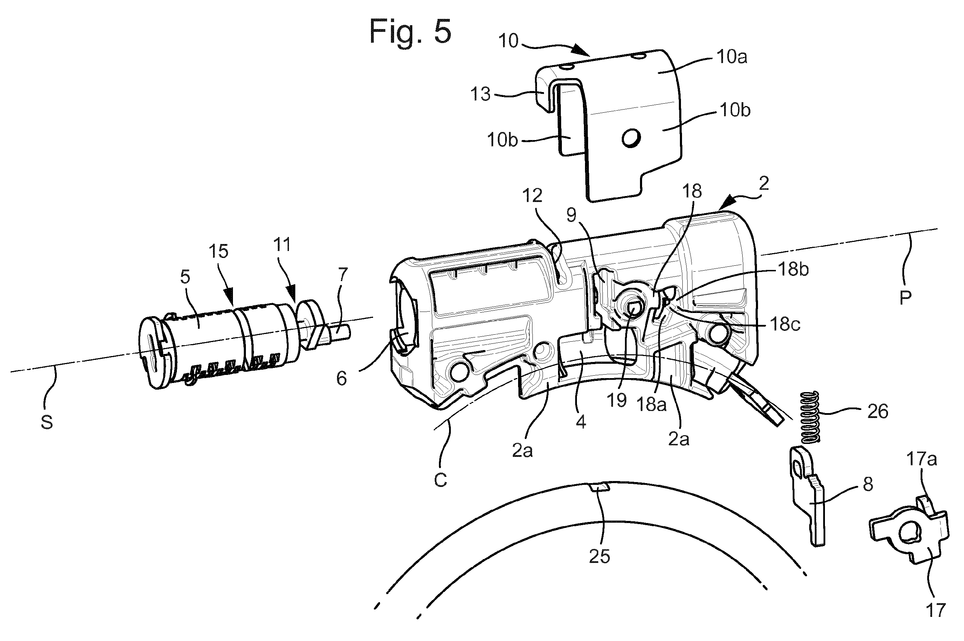

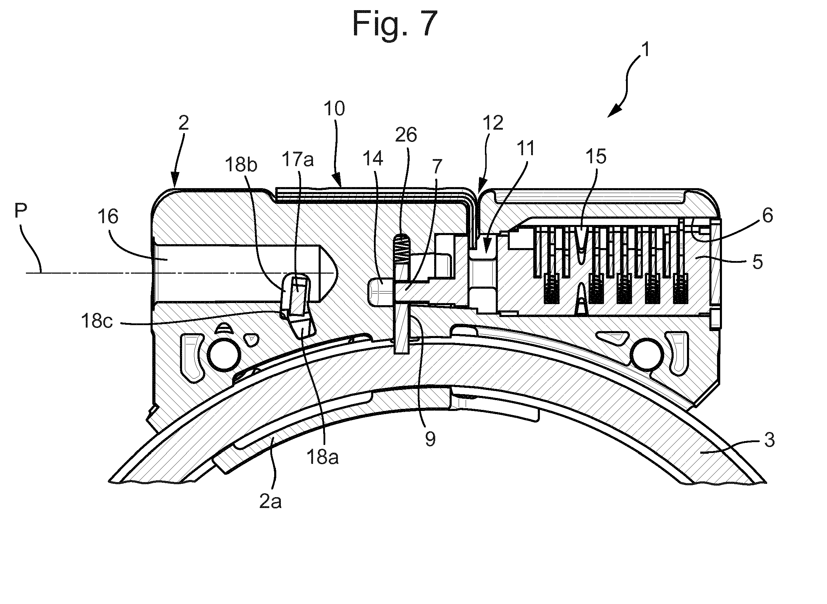

Further, Figs. 2-8 show that lock housing 2 in this embodiment is implemented as a casting, so that all form elements, such as for instance the fixing element receiving cavity 18, the locking plate receiving cavity 9, the lock cylinder opening 6, the cable pin opening 16 and the various recesses can all be formed at once during casting. In that embodiment, the earlier-mentioned fixing element receiving cavity 18 in the lock housing 2, in which a fixing element shaft 19 is included, is preferably also an integral part of the lock housing 2. The fixing element shaft 19 has an axis that is at right angles to a cable pin opening axis P of a cable pin opening 16 (represented in Fig. 5). The fixing element 17, which is movably, and in this example more particularly pivotably, arranged in the lock housing 2, is in engagement with the locking plate 8 in this example. In an alternative implementation, the fixing element 17 could also be in engagement with the eccentric cam 7. In the example shown, a second spring 27 is present (see Figs. 2-4) which engages the fixing element 17 and which biases the fixing element 17 into a locking position. In that locking position, the fixing element 17, more particularly the fixing element flange 17a, extends partly into the cable pin opening 16 (visible in Fig. 7) in a plane substantially perpendicular to the cable pin opening axis P. In the locking position the fixing element flange 17a is in engagement with a cable pin circumferential groove 29a of a cable pin 29 plugged in the cable pin opening 16. In an alternative embodiment, the fixing element 17 could be biased into the locking position by the spring action of the first spring 26 instead of by the spring action of the second spring 27. In that alternative embodiment, only a single spring would be involved then. Through rotation of the lock cylinder 5 and the eccentric cam 7 connected therewith, the locking plate 8 is moved against spring action into an unlocking position. By the movement of the locking plate 8, also the fixing element 17 is moved, more particularly pivoted, and the fixing element 17 is thus brought out of engagement with the cable pin circumferential groove, so that the cable pin 29 can be taken out of the cable pin opening 16.

In an alternative embodiment, the fixing element 17, instead of being engaged by the locking plate 8, may be engaged directly by the eccentric cam 7, so that the eccentric cam 7 moves not only the locking plate 8 but also the fixing element 17.

The fixing element 17 is placeable in the fixing element receiving cavity 18 via a fixing element receiving cavity supply opening, which provides access to the fixing element receiving cavity 18. The fixing element 17 in this example is bearing-mounted on the fixing element shaft 19. In the assembled condition, the fixing element 17 is enclosed by the covering cap legs 10b of the covering cap 10, extending on opposite sides of the lock housing 2.

Figs. 4 and 5 show the above-described example in an exploded view. Some aspects of the ring lock 1, such as, for instance, the fixing element receiving cavity 18, the flange receiving cavity 18a and the chamber 18b and the fixing element flange 17a, are still better visible in these figures. The ring bolt 3 is received in the ring bolt channel 4 and is enclosed by the ring bolt channel walls 2a, such that the ring bolt 3 is removable from and placeable in the ring bolt channel 4 solely in the direction of the circular segment-shaped axis C.

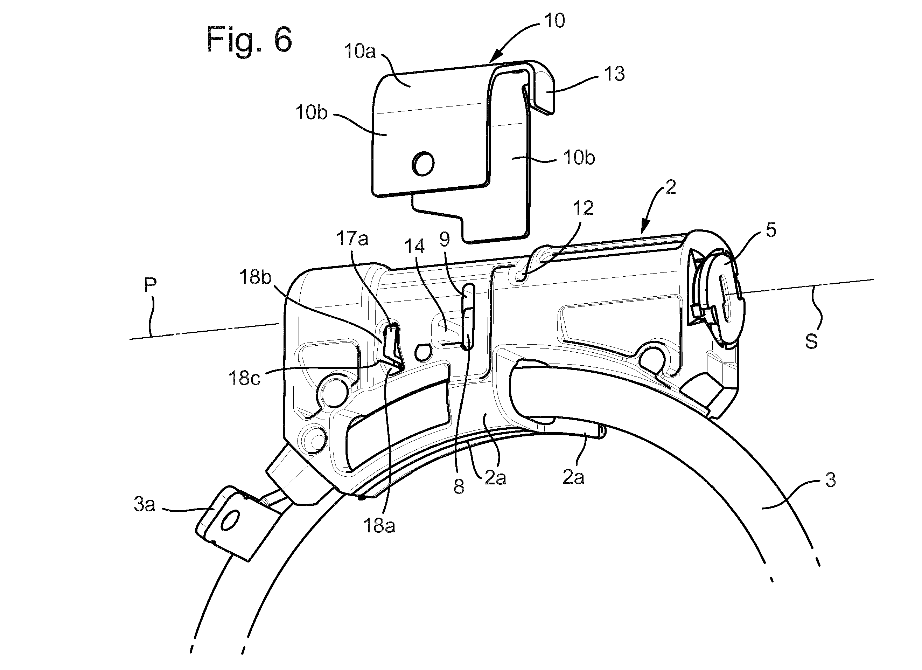

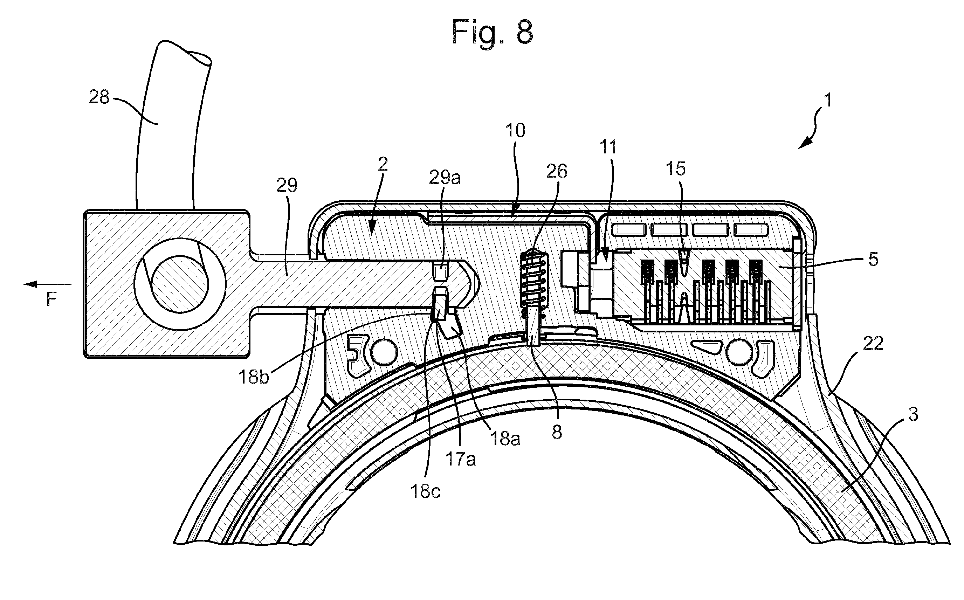

Fig. 6 shows the lock housing 2 from a different viewpoint, clearly visualizing the fixing element flange 17a, the flange receiving cavity 18a and the chamber 18b. Also, it is visible that the chamber 18b forms a threshold 18c in the flange receiving cavity 18a that blocks vertical movement of the fixing element flange 17a when the fixing element flange 17a as a result of a pulling force exerted on the cable pin 29 has been pulled into the chamber 18b through movement resulting from play and/or deformation of the fixing element flange 17a. If the fixing element flange 17a seeks to move down when it has been pulled into the chamber 18b as a result of a pulling force exerted on the cable pin 29, it will run against the threshold 18c. The fixing element flange 17a is thus forced to remain in the locking position. This condition is clearly represented in Fig. 8. When no pulling force is exerted on the cable pin 29, the fixing element flange 17a is not in the chamber 18b and is movable up and down in the flange receiving cavity 18a. This situation is represented in Fig. 7.

Fig. 6 also shows a blocking recess 14, which is integrally included in the lock housing 2. The blocking recess 14 is so arranged that the eccentric cam 7 extends into the blocking recess 14 when the lock cylinder 5 has been forced from a closed, normal use position into an axially inwardly moved position. The eccentric cam 7 extending into the blocking recess 14 is then blocked and the locking plate 8 being in engagement therewith cannot be moved out of the locking position anymore. As a consequence, the locking plate 8 is not capable of being brought from the locked to the unlocked state anymore. This blocking recess 14 is also clearly visible in Fig. 7.

Figs. 4, 5 and 7 show that the lock cylinder 5 has a circumferential groove 11 near the connection between the lock cylinder 5 and the eccentric cam 7. This connection constitutes at the circumferential groove 11 a first break protection, which breaks upon exertion of an axial force above a particular threshold value. Also visible in these figures is that the lock cylinder 5 in this example comprises a first and a second part, with a second circumferential groove 15 located between the first part and the second part of the lock cylinder 5. The second circumferential groove 15 forms a second break protection, which breaks upon exertion of an axial force on the lock cylinder 5 above a particular threshold value.

Figs. 2-8 also show that the lock housing 2 is provided with a recess 12, which extends into the lock cylinder opening 6. The covering cap 10 is provided with a blocking flange 13, substantially extending in a plane perpendicular to the lock cylinder axis S. The blocking flange 13 extends through the recess 12 into the lock cylinder opening 6 and the circumferential groove 11 of the lock cylinder 5, such that the lock cylinder 5 is confined in axial direction by the blocking flange 13.

In assembling the ring lock 1, the ring bolt 3, with the substantially circular segment-shaped configuration, is moved along the circular segment-shaped axis C into the ring bolt channel 4. The ring bolt 3 is thereby enclosed by the ring bolt channel walls 2a and is bringable into a closed position and an opened position.

Next, the locking plate 8 and the associated first spring 26 are introduced in a direction parallel to the Y direction into the locking plate receiving cavity 9 provided in the lock housing 2. The locking plate 8 thereby engages, in closed condition of the ring lock, in a notch 20 in the circular segment-shaped ring bolt 3. Further, parallel to the Y direction, the fixing element 17 and the associated second spring 27 are introduced into the fixing element receiving cavity 18 which is an integral part of the lock housing 2. The fixing element 17 is arranged on the fixing element shaft 19, such that the fixing element 17 is pivotably arranged in the lock housing 2. The fixing element 17 is then in engagement with the locking plate 8 or, in an alternative embodiment, in engagement with the eccentric cam 7.

After this, the lock cylinder 5 is inserted parallel to the X direction into the lock cylinder opening 6 of the lock housing 2, such that the eccentric cam 7 of the lock cylinder 5 engages the locking plate 8. The ring bolt 3 in the closed position is locked by the locking plate 8 and through rotation of the lock cylinder 5 is released so that it can be brought in the opened position, for instance by means of the helical draw spring, not shown.

The covering cap 10 is placed parallel to the Z direction over the lock housing 2. Placement is such that the covering cap legs 10b extend on opposite sides of the lock housing 2, with the covering cap 10 covering the locking plate receiving cavity supply opening, such that the locking plate 8 is confined in the locking plate receiving cavity 9. Also, at least one of the covering cap legs 10b extends so as to cover the fixing element receiving cavity supply opening, such that the fixing element 17 is confined in the fixing element receiving cavity 18.

The above-described assembly of the ring lock 1 is simple and quick and may even take place in an automated manner. As the parts are brought towards each other from different directions, disassembly upon sabotage of the lock is much more difficult than in the case of conventional locks that have been put together via the traditional stacking method.

The various embodiments described above can be applied independently of each other and combined with each other in different ways. The reference numerals in the detailed description and the claims do not limit the description of the embodiments and the claims and serve for clarification only.

## Claims

1. A ring lock at least comprising:
- a lock housing (2);
- a lock mechanism which is included in the lock housing (2);
- a ring bolt (3) having a substantially circular segment-shaped configuration, while the ring bolt (3) is bringable in a closed position and an opened position and in the closed position is locked by the lock mechanism and through operation of the lock mechanism is released to be brought in the opened position;
- a cable or chain (28) provided with a cable pin (29) having a cable pin circumferential groove (29a);
- a cable pin opening (16) which is provided in the lock housing (2) and which extends in the direction of a cable pin opening axis (P), in which the cable pin (29) can be received;
- a fixing element (17) which is movably arranged in the lock housing (2) and which is bringable in a locking position in which a fixing element flange (17a) of the fixing element (17) extends at least partly into the cable pin opening (16), so that the fixing element flange (17a) in the locking position is in engagement with the cable pin circumferential groove (29a) of a cable pin (29) introduced into the cable pin opening (16), the fixing element (17) being movable through operation of the lock mechanism into an unlocking position in which the fixing element flange (17a) has been brought out of engagement with the cable pin circumferential groove (29a);
- a fixing element receiving cavity (18) which is formed in the lock housing (2) and in which the movable fixing element (17) is received, the fixing element receiving cavity (18) comprising a flange receiving cavity (18a) in which the fixing element flange (17a) is received in a manner movable from the locking position to the unlocking position and vice versa;
**characterized in that** the flange receiving cavity (18a) on a side thereof facing the cable pin opening (16) is provided with a chamber (18b), whose dimension viewed in the movement direction of the fixing element flange (17a) during locking and unlocking substantially corresponds to the dimension of the fixing element flange (17a) **in that** direction, and wherein the fixing element (17) is received in the fixing element receiving cavity (18) with some play and/or is slightly deformable, such that as a result of an exertion of a pulling force on the cable pin (29), the fixing element flange (17a) moves into the chamber (18b), so that movement of the fixing element (17) being in the locking position is blocked.

2. The ring lock according to claim 1, wherein the ring lock (1) is provided with:
- a covering cap (10) which has a substantially U-shaped configuration with a covering cap body (10a) and covering cap legs (10b), with the covering cap placed over the lock housing (2), such that the covering cap legs (10b) are on two opposite sides of the lock housing (2), the covering cap (10) being made from a hardened metal, such as hardened steel, or from a hard alloy.

3. The ring lock according to claim 2, wherein the lock housing (2) is a casting and is provided with:
- a fixing element shaft (19) which is an integral part of the lock housing (2) and is included in the fixing element receiving cavity (18), the fixing element shaft (19) having an axis that is at right angles to the cable pin opening axis (P);
- a fixing element receiving cavity supply opening which provides access to the fixing element receiving cavity (18) and via which fixing element receiving cavity supply opening the fixing element (17) is placeable in the fixing element receiving cavity (18), while in an assembled condition of the ring lock (1) the fixing element (17) is pivotably bearing-mounted on the fixing element shaft (19), the fixing element (17) being confined by one of the covering cap legs (10b) extending on opposite sides of the lock housing (2).

4. The ring lock according to claim 2 or 3, wherein the lock mechanism comprises:
- a lock cylinder (5) which is received in a lock cylinder opening (6) of the lock housing (2) and which extends in the direction of a lock cylinder axis (S);
- an eccentric cam (7) which is disposed eccentrically with respect to the lock cylinder axis (S) and is connected with the lock cylinder (5);
- a locking plate (8) which is movably included in the lock housing (2) and is in engagement with the eccentric cam (7), while the locking plate (8) in a closed condition of the ring bolt (3) engages a notch (20) provided in the ring bolt (3) and, through rotation of the lock cylinder (5) and the eccentric cam (7) connected therewith, is bringable, against spring action, into an unlocking position in which it has been brought out of engagement with the notch (20);
wherein the ring lock (1) is further provided with:
- a locking plate receiving cavity (9) which is formed in the lock housing (2) and which is provided with a locking plate receiving cavity supply opening, while the locking plate (8) in an assembled condition of the ring lock (1) is received in the locking plate receiving cavity (9), and during assembly the locking plate (8) is bringable via the locking plate receiving cavity supply opening into the locking plate receiving cavity (9); and
wherein at least one of the covering cap legs (10b) covers the locking plate receiving cavity supply opening, such that the locking plate (8) is confined in the locking plate receiving cavity (9).

5. The ring lock (1) according to claim 4, wherein the lock cylinder (5) includes a circumferential groove (11) near the connection between the lock cylinder (5) and the eccentric cam (7), so that at the circumferential groove (11) a first break protection is provided, which breaks upon exertion of an axial force above a particular threshold value.

6. The ring lock (1) according to claim 5, wherein:
- the lock housing (2) is provided with a recess (12) which extends into the lock cylinder opening (6); and wherein
- the covering cap (10) is provided with a blocking flange (13) which extends substantially in a plane perpendicular to the lock cylinder axis and which in an assembled condition of the lock extends through the recess (12) into the lock cylinder opening (6), into the circumferential groove (11) in the lock cylinder (5), such that the lock cylinder (5) is confined in axial direction by the blocking flange (13).

7. The ring lock (1) according to claim 6, comprising:
- a blocking recess (14) which is integrally included in the lock housing (2) and which is so arranged that the eccentric cam (7) extends into the blocking recess (14) when the lock cylinder (5) has been forced from a closed, normal use position into an axially inwardly moved position, whereby the eccentric cam (7) extending into the blocking recess (14) is fixed and blocks the locking plate (8) being in engagement therewith, such that the locking plate (8) is not bringable from the locked to the unlocked state anymore.

8. The ring lock (1) according to claim 6 or 7, wherein the lock cylinder (5) comprises a first and a second part, wherein the lock cylinder (5) is provided with a second circumferential groove (15), which is located between said first and said second part of the lock cylinder (5), and wherein the second circumferential groove (15) forms a second break protection, which breaks upon exertion of an axial force on the lock cylinder (5) above a particular threshold value.

9. The ring lock according to any one of the preceding claims, wherein the lock housing (2) comprises a single casting with a ring bolt channel (4) which extends along a circular segment-shaped axis (C), wherein the ring bolt channel (4) is bounded by ring bolt channel walls (2a) which form an integral part of the casting and which enclose the ring bolt (3) which is in the ring bolt channel (4), such that the ring bolt (3) is removable from the ring bolt channel (4) and is placeable therein solely in the direction of the circular segment-shaped axis (C).

## Patentansprüche

1. Ringschloss, mindestens umfassend:
- ein Schlossgehäuse (2);
- einen Schlossmechanismus, der in dem Schlossgehäuse (2) enthalten ist;
- einen Ringbolzen (3) mit einer im Wesentlichen segmentförmigen Konfiguration, während der Ringbolzen (3) in eine geschlossene Position und in eine geöffnete Position gebracht werden kann und in der geschlossenen Position von dem Schlossmechanismus verriegelt ist und durch Betätigung des Schlossmechanismus entriegelt wird, um in die geöffnete Position gebracht zu werden;
- ein Kabel oder eine Kette (28), versehen mit einem Kabelstift (29) mit einer Kabelstift-Umfangrille (29a);
- eine Kabelstiftöffnung (16), die in dem Schlossgehäuse (2) bereitgestellt ist und die in Richtung einer Kabelstiftöffnungsachse (P), in welche der Kabelstift (29) aufgenommen werden kann, verläuft;
- ein Befestigungselement (17), das beweglich in dem Schlossgehäuse (2) angeordnet ist und das in eine Verriegelungsposition gebracht werden kann, in der ein Befestigungselementflansch (17a) des Befestigungselements (17) mindestens teilweise in die Kabelstiftöffnung (16) verläuft, sodass der Befestigungselementflansch (17a) in der Verriegelungsposition im Eingriff mit der Kabelstift-Umfangrille (29a) des in die Kabelstiftöffnung (16) eingeführten Kabelstifts (29) ist, wobei das Befestigungselement (17) durch Betätigung des Schlossmechanismus in eine Entriegelungsposition bewegt werden kann, in welcher der Befestigungselementflansch (17a) aus dem Eingriff mit der Kabelstift-Umfangrille (29a) gebracht wurde;
- einen Befestigungselement-Aufnahmehohlraum (18), der in dem Schlossgehäuse (2) gebildet ist und in dem das bewegliche Befestigungselement (17) aufgenommen ist, wobei der Befestigungselement-Aufnahmehohlraum (18) einen Flanschaufnahmehohlraum (18a) umfasst, in den der Befestigungselementflansch (17a) in einer Weise aufgenommen ist, die von der Verriegelungsposition zu der Entriegelungsposition beweglich ist, und umgekehrt;
**dadurch gekennzeichnet, dass** der Flanschaufnahmehohlraum (18a) an einer der Kabelstiftöffnung (16) gegenüberliegenden Seite mit einer Kammer (18b) versehen ist, deren Abmessung, gesehen in der Bewegungsrichtung des Befestigungselementflansches (17a) beim Verriegeln und Entriegeln im Wesentlichen der Abmessung des Befestigungselementflansches (17a) in dieser Richtung entspricht, und wobei das Befestigungselement (17) in den Befestigungselement-Aufnahmehohlraum (18) mit einem gewissen Spiel aufgenommen ist und/oder leicht verformbar ist, sodass infolge einer Ausübung einer Ziehkraft auf den Kabelstift (29) der Befestigungselementflansch (17a) sich in die Kammer (18b) bewegt, sodass die Bewegung des Befestigungselements (17), das in der Verriegelungsposition ist, blockiert wird.

2. Ringschloss nach Anspruch 1, wobei das Ringschloss (1) versehen ist mit:
- einer Abdeckkappe (10), die eine im Wesentlichen U-förmige Konfiguration hat, mit einem Abdeckkappenkörper (10a) und Abdeckkappenbeinen (10b), wobei die Abdeckkappe so über dem Schlossgehäuse (2) platziert ist, dass die Abdeckkappenbeine (10b) an zwei entgegengesetzten Seiten des Schlossgehäuses (2) sind, wobei die Abdeckkappe (10) aus einem gehärteten Metall wie etwa gehärtetem Stahl oder aus einer Hartlegierung hergestellt ist.

3. Ringschloss nach Anspruch 2, wobei das Schlossgehäuse (2) ein Gussstück ist und versehen ist mit:
- einem Befestigungselementschaft (19), der ein integraler Teil des Schlossgehäuses (2) ist und in dem Befestigungselement-Hohlraum (18) enthalten ist, wobei der Befestigungselementschaft (19) eine Achse hat, die in rechten Winkeln zu der Kabelstiftöffnungsachse (P) ist;
- einer Zufuhröffnung zu dem Befestigungselement-Aufnahmehohlraum, die Zugang zu dem Befestigungselement-Aufnahmehohlraum (18) bietet und über welche Zufuhröffnung des Befestigungselement-Aufnahmehohlraums das Befestigungselement (17) in dem Befestigungselement-Aufnahmehohlraum (18) platziert werden kann, während in einem montierten Zustand des Ringschlosses (1) das Befestigungselement (17) drehbar an dem Befestigungselementschaft (19) lagermontiert ist, wobei das Befestigungselement (17) durch eines der Abdeckkappenbeine (10b), verlaufend auf entgegengesetzten Seiten des Schlossgehäuses (2), eingeschlossen ist.

4. Ringschloss nach Anspruch 2 oder 3, wobei der Verriegelungsmechanismus Folgendes umfasst:
- einen Schlosszylinder (5), der in einer Schlosszylinderöffnung (6) des Schlossgehäuses (2) aufgenommen ist und der in Richtung einer Schlosszylinderachse (S) verläuft;
- eine exzentrische Nocke (7), die exzentrisch in Bezug auf die Schlosszylinderachse (S) angeordnet ist und mit dem Schlosszylinder (5) verbunden ist;
- eine Verriegelungsplatte (8), die beweglich in dem Schlossgehäuse (2) enthalten ist und im Eingriff mit der exzentrischen Nocke (7) ist, während die Verriegelungsplatte (8) in einem geschlossenen Zustand des Ringbolzens (3) in eine in dem Ringbolzen (3) bereitgestellte Kerbe (20) eingreift und durch Drehung des Schlosszylinders (5) und der damit verbundenen exzentrischen Nocke (7) gegen Federwirkung in eine Entriegelungsposition gebracht werden kann, in der sie aus dem Eingriff mit der Kerbe (20) gebracht wurde;
wobei das Ringschloss (1) ferner versehen ist mit:
- einem Verriegelungsplatten-Aufnahmehohlraum (9), der in dem Schlossgehäuse (2) gebildet ist und der mit einer Zufuhröffnung zu dem Verriegelungsplatten-Aufnahmehohlraum versehen ist, während die Verriegelungsplatte (8) in einem montierten Zustand des Ringschlosses (1) in den Verriegelungsplatten-Aufnahmehohlraum (9) aufgenommen ist, und während des Montierens die Verriegelungsplatte (8) über die Zufuhröffnung des Verriegelungsplatten-Aufnahmehohlraums in den Verriegelungsplatten-Aufnahmehohlraum (9) gebracht werden kann; und
wobei mindestens eines der Abdeckkappenbeine (10b) die Zufuhröffnung des Verriegelungsplatten-Aufnahmehohlraums so bedeckt, dass die Verriegelungsplatte (8) in dem Verriegelungsplatten-Aufnahmehohlraum (9) eingeschlossen ist.

5. Ringschloss (1) nach Anspruch 4, wobei der Schlosszylinder (5) eine Umfangrille (11) nahe der Verbindung zwischen dem Schlosszylinder (5) und der exzentrischen Nocke (7) enthält, sodass an der Umfangrille (11) eine erste Bruchsicherung bereitgestellt ist, die bei Ausübung einer Axialkraft über einem bestimmten Schwellenwert bricht.

6. Ringschloss (1) nach Anspruch 5, wobei:
- das Schlossgehäuse (2) mit einer Vertiefung (12) versehen ist, die in die Schlosszylinderöffnung (6) verläuft; und wobei
- die Abdeckkappe (10) mit einem Blockierflansch (13) versehen ist, der im Wesentlichen in einer Ebene senkrecht zu der Schlosszylinderachse verläuft und der in einem montierten Zustand des Schlosses durch die Vertiefung (12) in die Schlosszylinderöffnung (6), in die Umfangrille (11) in dem Schlosszylinder (5) verläuft, sodass der Schlosszylinder (5) in einer axialen Richtung von dem Blockierflansch (13) eingeschlossen ist.

7. Ringschloss (1) nach Anspruch 6, umfassend:
- eine Blockiervertiefung (14), die integral in dem Schlossgehäuse (2) enthalten ist und die so angeordnet ist, dass die exzentrische Nocke (7) in die Blockiervertiefung (14) verläuft, wenn der Schlosszylinder (5) aus einer geschlossenen, normalen Verwendungsposition in eine axial einwärts bewegte Position gezwungen wurde, wobei die exzentrische Nocke (7), die in die Blockiervertiefung (14) verläuft, fixiert ist und die Verriegelungsplatte (8), die im Eingriff damit ist, blockiert, sodass die Verriegelungsplatte nicht mehr aus dem verriegelten in den entriegelten Zustand gebracht werden kann.

8. Ringschloss (1) nach Anspruch 6 oder 7, wobei der Schlosszylinder (5) einen ersten und einen zweiten Teil um fasst, wobei der Schlosszylinder (5) mit einer zweiten Umfangrille (15) versehen ist, die zwischen dem ersten und dem zweiten Teil des Schlosszylinders (5) angeordnet ist, und wobei die zweite Umfangrille (15) eine zweite Bruchsicherung bildet, die bei Ausübung einer Axialkraft auf den Schlosszylinder (5) über einem bestimmten Schwellenwert bricht.

9. Ringschloss nach einem der vorhergehenden Ansprüche, wobei das Schlossgehäuse (2) ein einzelnes Gussstück mit einem Ringbolzenkanal (4) umfasst, der entlang einer kreisförmigen, segmentförmigen Achse (C) verläuft, wobei der Ringbolzenkanal (4) von Ringbolzen-Kanalwänden (2a) begrenzt ist, die einen integralen Teil des Gussstücks bilden und die den Ringbolzen, der in dem Ringbolzenkanal (4) ist, so einschließen, dass der Ringbolzen (3) aus dem Ringbolzenkanal (4) entfernt werden kann und darin nur in Richtung der kreisförmigen, segmentförmigen Achse (C) platziert werden kann.

## Revendications

1. Antivol de forme annulaire comprenant au moins :
un logement de serrure (2) ;
un mécanisme de serrure qui est inclus dans le logement de serrure (2) ;
un boulon annulaire (3) ayant une configuration en forme de segment sensiblement circulaire, alors que le boulon annulaire (3) peut être amené dans une position fermée et une position ouverte, et dans la position fermée, est verrouillé par le mécanisme de serrure et par le biais de l'opération du mécanisme de serrure, est libéré pour être amené dans la position ouverte ;
un câble ou chaîne (28) prévu(e) avec une broche de câble (29) ayant une rainure circonférentielle de broche de câble (29a) ;
une ouverture de broche de câble (16) qui est prévue dans le logement de serrure (2) et qui s'étend dans la direction d'un axe d'ouverture de broche de câble (P), dans lequel la broche de câble (29) peut être reçue ;
un élément de fixation (17) qui est agencé de manière mobile dans le logement de serrure (2) et qui peut être amené dans une position de verrouillage dans laquelle une bride d'élément de fixation (17a) de l'élément de fixation (17) s'étend au moins partiellement dans l'ouverture de broche de câble (16), de sorte que la bride d'élément de fixation (17a), dans la position de verrouillage, est en mise en prise avec la rainure circonférentielle de broche de câble (29a) d'une broche de câble (29) introduite dans l'ouverture de broche de câble (16), l'élément de fixation (17) étant mobile par le biais de l'opération du mécanisme de serrure dans une position de déverrouillage dans laquelle la bride d'élément de fixation (17a) a été amenée hors de mise en prise avec la rainure circonférentielle de broche de câble (29a) ;
une cavité de réception d'élément de fixation (18) qui est formée dans le logement de serrure (2) et dans laquelle l'élément de fixation mobile (17) est reçu, la cavité de réception d'élément de fixation (18) comprenant une cavité de réception de bride (18a) dans laquelle la bride d'élément de fixation (17a) est reçue de manière mobile, de la position de verrouillage à la position de déverrouillage et vice versa ;
**caractérisé en ce que** la cavité de réception de bride (18a) sur son côté orienté vers l'ouverture de broche de câble (16), est prévue avec une chambre (18b), dont la dimension observée dans la direction de déplacement de la bride d'élément de fixation (17a) pendant le verrouillage et le déverrouillage correspond sensiblement à la dimension de la bride d'élément de fixation (17a) dans cette direction, et dans lequel l'élément de fixation (17) est reçu dans la cavité de réception d'élément de fixation (18) avec un certain jeu et/ou est légèrement déformable, de sorte qu'à cause d'un exercice d'une force de traction sur la broche de câble (29), la bride d'élément de fixation (17a) se déplace dans la chambre (18b), de sorte que le déplacement de l'élément de fixation (17), qui est dans la position de verrouillage, est empêché.

2. Antivol de forme annulaire selon la revendication 1, dans lequel l'antivol de forme annulaire (1) est prévu avec :
un capuchon de recouvrement (10) qui a une configuration sensiblement en forme de U avec un corps de capuchon de recouvrement (10a) et des pattes de capuchon de recouvrement (10b), avec le capuchon de recouvrement placé sur le boîtier de serrure (2), de sorte que les pattes de capuchon de recouvrement (10b) sont sur deux côtés opposés du logement de serrure (2), le capuchon de recouvrement (10) étant réalisé à partir d'un métal durci, tel que l'acier durci ou à partir d'un alliage dur.

3. Antivol de forme annulaire selon la revendication 2, dans lequel le logement de serrure (2) est une pièce moulée et est prévu avec :
un arbre d'élément de fixation (19) qui fait partie intégrante du logement de serrure (2) et est inclus dans la cavité de réception d'élément de fixation (18), l'arbre d'élément de fixation (19) ayant un axe qui est en angle droit par rapport à l'axe d'ouverture de broche de câble (P) ;
une ouverture de fourniture de cavité de réception d'élément de fixation qui fournit l'accès à la cavité de réception d'élément de fixation (18) et via laquelle l'ouverture de fourniture de cavité de réception d'élément de fixation, l'élément de fixation (17) peut être placé dans la cavité de réception d'élément de fixation (18), tout en étant dans une condition assemblée de l'antivol de forme annulaire (1), l'élément de fixation (17) est monté sur palier de manière pivotante, sur l'arbre d'élément de fixation (19), l'élément de fixation (17) étant confiné par l'une des pattes de capuchon de recouvrement (10b) s'étendant sur les côtés opposés du logement de serrure (2).

4. Antivol de forme annulaire selon la revendication 2 ou 3, dans lequel le mécanisme de serrure comprenant :
un barillet de serrure (5) qui est reçu dans une ouverture de barillet de serrure (6) du logement de serrure (2) et qui s'étend dans la direction d'un axe de barillet de serrure (S) ;
une came excentrique (7) qui est disposée de manière excentrique par rapport à l'axe de barillet de serrure (S) et est raccordée au barillet de serrure (5) ;
une plaque de verrouillage (8) qui est incluse de manière mobile dans le logement de serrure (2) et est en mise en prise avec la came excentrique (7), alors que la plaque de verrouillage (8), dans une condition fermée du boulon de forme annulaire (3), met en prise une encoche (20) prévue dans le boulon de forme annulaire (3) et, par le biais de la rotation du barillet de serrure (5) et de la came excentrique (7) raccordée à ce dernier, peut être amenée, contre l'action du ressort, dans une position de verrouillage dans laquelle elle a été amenée hors de mise en prise avec l'encoche (20) ;
dans lequel l'antivol de forme annulaire (1) est en outre prévu avec :
une cavité de réception de plaque de verrouillage (9) qui est formée dans le logement de serrure (2) et qui est prévue avec une ouverture de fourniture de cavité de réception de plaque de verrouillage, alors que la plaque de verrouillage (8), dans une condition assemblée de l'antivol de forme annulaire (1), est reçue dans la cavité de réception de plaque de verrouillage (9), et pendant l'assemblage, la plaque de verrouillage (8) peut être amenée, via l'ouverture de fourniture de cavité de réception de plaque de verrouillage, dans la cavité de réception de plaque de verrouillage (9) ; et
dans lequel au moins l'une des pattes de capuchon de recouvrement (10b) recouvre l'ouverture de fourniture de cavité de réception de plaque de verrouillage, de sorte que la plaque de verrouillage (8) est confinée dans la cavité de réception de plaque de verrouillage (9).

5. Antivol de forme annulaire (1) selon la revendication 4, dans lequel le barillet de serrure (5) comprend une rainure circonférentielle (11) à proximité du raccordement entre le barillet de serrure (5) et la came excentrique (7), de sorte qu'au niveau de la rainure circonférentielle (11), on prévoit une première protection de rupture, qui se casse suite à l'exercice d'une force axiale supérieure à une valeur de seuil particulière.

6. Antivol de forme annulaire (1) selon la revendication 5, dans lequel :
le logement de serrure (2) est prévu avec un évidement (12) qui s'étend dans l'ouverture de barillet de serrure (6) ; et dans lequel :
le capuchon de recouvrement (10) est prévu avec une bride de blocage (13) qui s'étend sensiblement dans un plan perpendiculaire à l'axe de barillet de serrure et qui, dans une condition assemblée de la serrure, s'étend à travers l'évidement (12) dans l'ouverture de barillet de serrure (6), dans la rainure circonférentielle (11) dans le barillet de serrure (5), de sorte que le barillet de serrure (5) est confiné dans la direction axiale par la bride de blocage (13).

7. Antivol de forme annulaire (1) selon la revendication 6, comprenant :
un évidement de blocage (14) qui est inclus de manière solidaire dans le logement de serrure (2) et qui est agencé de sorte que la came excentrique (7) s'étend dans l'évidement de blocage (14) lorsque le barillet de serrure (5) a été forcé d'une position d'utilisation normale fermée dans une position déplacée axialement vers l'intérieur, moyennant quoi la came excentrique (7) s'étendant dans l'évidement de blocage (14) est fixée et bloque la plaque de verrouillage (8) qui est en mise en prise avec cette dernière, de sorte que la plaque de verrouillage (8) ne peut plus être amenée de l'état verrouillé à l'état déverrouillé.

8. Antivol de forme annulaire (1) selon la revendication 6 ou 7, dans lequel le barillet de serrure (5) comprend une première et une seconde partie, dans lequel le barillet de serrure (5) est prévu avec une seconde rainure circonférentielle (15), qui est positionnée entre ladite première et ladite seconde partie du barillet de serrure (5), et dans lequel la seconde rainure circonférentielle (15) forme une seconde protection de rupture, qui se casse suite à l'exercice d'une force axiale sur le barillet de serrure (5) supérieure à une valeur de seuil particulière.

9. Antivol de forme annulaire selon l'une quelconque des revendications précédentes, dans lequel le logement de serrure (2) comprend une seule pièce moulée avec un canal de boulon de forme annulaire (4) qui s'étend le long d'un axe en forme de segment circulaire (C), dans lequel le canal de boulon de forme annulaire (4) est limité par des parois de canal de boulon de forme annulaire (2a) qui font partie intégrante de la pièce moulée et qui enferment le boulon de forme annulaire (3) qui est dans le canal de boulon de forme annulaire (4), de sorte que le boulon de forme annulaire (3) est amovible du canal de boulon de forme annulaire (4) et peut être placé à l'intérieur de ce dernier, uniquement dans la direction de l'axe en forme de segment circulaire (C).
